Europäisches Patentamt

European Patent Office

Office européen des brevets

(11) Publication number: **0 475 064 A1**

## EUROPEAN PATENT APPLICATION

(21) Application number: **91113053.2**

(22) Date of filing: **02.08.91**

(51) Int. Cl.⁵: **C08K 9/04**, C08K 3/34

A request for correction of page 4 has been filed pursuant to Rule 88 EPC. A decision on the request will be taken during the proceedings before the Examining Division (Guidelines for Examination in the EPO, A-V, 2.2).

(30) Priority: **03.08.90 IT 2119090**

(43) Date of publication of application:
**18.03.92 Bulletin 92/12**

(84) Designated Contracting States:
**AT BE CH DE DK ES FR GB LI NL SE**

(71) Applicant: **ENICHEM AUGUSTA INDUSTRIALE S.r.l.**
**16, Piazza della Repubblica**
**I-20124 Milan(IT)**

(72) Inventor: **Bressan, Giancarlo**
**37, Via Compagnoni**
**I-20129 Milan(IT)**
Inventor: **Barbero, Giancarlo**
**22, Via Vittorio Veneto**
**I-28041 Arona, Novara(IT)**
Inventor: **Troglia, Claudio**
**27, Via Raffaello Sanzio**
**I-20149 Milan(IT)**
Inventor: **Brichta, Corrado**
**36, Via Losanna**
**I-20154 Milan(IT)**

(74) Representative: **Weinhold, Peter, Dr. et al**
**Patentanwälte Dipl.-Ing. G. Dannenberg Dr. P. Weinhold Dr. D. Gudel Dipl.-Ing. S. Schubert Dr. P. Barz Siegfriedstrasse 8 W-8000 München 40(DE)**

(54) **Cross-linkable polymeric compositions, process for their preparation and molded articles obtained therefrom.**

(57) Disclosed are polymeric compositions which are cross-linkable after or during the molding and which comprise silanized olefinic polymers containing zeolites in finely divided form which have been modified at elevated temperature with at least one carboxylic and/or sulfonic acid.

EP 0 475 064 A1

The present invention relates to cross-linkable polymeric compositions, to a process for their preparation and to articles obtained therefrom.

More particularly, the present invention relates to compositions comprising silanized polyolefins and zeolites modified with organic acids which are capable of being cross-linked by essentially non-hydrolytic processes after or during the molding step.

According to the state of the art, represented, e.g., by GB-A-1,234,034 and 1,286,460, olefinic polymers modified with alkoxysilane groups can be cross-linked, thus yielding -Si-O-Si- bonds among different chains,by hydrolysis and condensation reactions of the alkoxysilane groups present on said chains.

Silanized polymers containing hydrolyzable alkoxysilane groups are generally transformed, after addition of a silanolic condensation catalyst, into shaped articles by means of extrusion or other commonly used thermoforming processes and thereafter these articles are subjected to cross-linking by exposure to water or vapour.

However, this method is not suitable for producing cross-linked articles having a considerable thickness, due to the slow diffusion inside the article of the water necessary for hydrolyzing the alkoxysilane groups. This fact has limited the applications of corresponding compositions prevalingly to insulations for high and medium voltage electric cables wherein the thickness of the cross-linked polymeric composition is low.

A substantial improvement has been achieved by the processes described in US-A-4,529,750 and 4,680,319.

These patents describe the use of silanized polyolefinic compositions to which zeolites with different water contents have been added in order to accelerate the silanic cross-linking without giving rise to the formation of blisters or porosities (caused by an excessive release of water) in the cross-linked manufactured article. Also described is the use of a cross-linking co-agent consisting of an arylcarboxylic or arylsulfonic acid (optionally chemiadsorbed on the zeolite) together with zeolite.

More particularly, US-A-4,680,319 describes the cross-linking of polyolefins grafted with hydrolyzable unsaturated silanes, using as cross-linking agent a finely divided zeolite and as cross-linking co-agent p-tert-butylbenzoic acid, both added to the polymer before the extrusion.

After the completion of the mixing step, the polymer is extruded and the obtained specimens are treated with hot water to initiate the cross-linking.

At the end of the treatment the specimens appear to be cross-linked, the cross-linking degree being higher than 70%.

It has now been found that if silanized polyolefins are mixed with a cross-linking agent comprising a zeolite treated, at elevated temperature, with a carboxylic and/or sulfonic acid, the already valuable results obtained by the prior art can be further improved significantly.

Accordingly, the present invention provides cross-linkable polymeric compositions comprising (a) an olefinic polymer modified with an unsaturated silane having hydrolyzable groups and (b) a zeolite in finely divided form and having a water content not higher than 3% by weight which has been modified with a least one carboxylic and/or sulfonic organic acid at a temperature of at least 150°C (and preferably higher than 150°C).

By means of the polymeric compositions of the present invention, articles or shaped bodies which cross-link within very short periods of time, can be prepared by using essentially non-hydrolytic cross-linking processes.

Generally, the results obtained thereby are better than those of the prior art because of the high cross-linking degree obtained through the action of heat and/or irradiation by means of, e.g., microwaves or infrared rays. Furthermore, the present compositions show a remarkable stability and do not undergo premature cross-linking during storage at room temperature, thus allowing the commercialization of a corresponding granulated product.

The present compositions also allow to reduce manufacturing times in common applications (for instance cables) and to broaden the range of industrial applications to articles of high thickness obtained by extrusion or injection moulding (for instance pipes for hot water, gasoline tanks, etc.).

Exemplary polyolefins for use in the present invention are

a) high, medium and low density polyethylene;

b) polypropylene;

c) copolymers of ethylene and propylene and/or other (preferably $\alpha$-) monoolefins (preferably having 4 to 8 carbon atoms, such as butene-1 and hexene-1);

d) thermoplastic rubbers of ethylene-propylene copolymers and ethylene-propylene-diene terpolymers;

e) ethylene-vinylacetate and ethylene-acrylate copolymers.

Silanized polyolefins can be obtained according to widely known techniques, e.g., by grafting unsaturated silanes (e.g. alkoxyvinylsilanes) onto the polyolefinic chain, preferably in the presence of peroxides.

Alternatively, the silane may be introduced through a chemical reaction, e.g., by esterification or transesterification thereof with carboxylic groups (or ester groups) of the polyolefinic chain (introduced, e.g., by copolymerization of the olefin(s) with (meth)acrylic acid or esters of these acids). Silanized polymers can also be obtained, for instance, according to the process described in EP-A-193 317, by copolymerizing the vinylsilane with the starting olefin(s).

Examples of silanes which are particularly suitable for the preparation of silanized polyolefins are vinyltrimethoxysilane, vinyltriethoxysilane, vinylmethyldimethoxysilane, vinyltriacetoxysilane, gamma-methacryloxypropyltrimethoxysilane, etc.

Further unsaturated alkoxysilanes such as, for instance, other alkoxyvinylsilanes (or acyloxyvinylsilanes) which can be used in the present invention are those commonly used in the silane cross-linking of polyolefins as described, e.g., in US-A-3,646,155. In particular, also suitable silanes are those of general formula (I):

$$R_n Si (O\text{-}CH_2 CHR''\text{-}OR')_{4-n} \qquad (I)$$

wherein:

n  is 1 or 2,
R'  represents a $C_1$-$C_4$ alkyl group (e.g. methyl or ethyl),
R''  represents an unsaturated monovalent radical as described in US-A-3,646,155.

Polyolefins grafted with these types of silanes are stable and can be cross-linked after molding according to the present invention.

Silanized polymers suitable for the compositions according to the present invention generally have a silane content of from 1 to 10% by weight, preferably of from 1.5 to 3% by weight.

Zeolites useful for the compositions of the present invention are, e.g., aluminium silicates of one or more alkali or alkaline earth metals, as described in D.Mreck "Zeolite molecular sieves", Wiley Interscience (1974), pages 133-180.

These zeolites correspond to the general formula (II):

$$Me_{2/x}.Al_2O_3.ySiO_2.zH_2O \qquad (II)$$

wherein:

Me  is a metal, preferably an alkali and/or alkaline earth metal;
x  is the (average) valence of the metal(s);
y  is the molar ratio $SiO_2/Al_2O_3$, which for the common zeolite types may vary as follows:
y  = 1.8 to 2.1 for zeolite A;
y  = 2 to 3 for zeolite X;
y  = 3 to 6 for zeolite Y;
z  is the hydration degree of the zeolite, which usually varies from 0 to 9 depending on the type of the zeolite.

The zeolite type to be used in compositions of the present invention preferably belongs to one of the following classes:

i) synthetic zeolites of type A, corresponding to the formula

$$Na_2O.Al_2O_3.2SiO_2.4.5H_2O$$

which is typical for zeolite 4A, wherein the $Na^+$ cation can be substituted by $K^+$ (zeolite 3A) and $Ca^{++}$ - (zeolite 5A);

ii) synthetic zeolites of the type X corresponding to the typical formula:

$$Na_2O.Al_2O_3.2.4SiO_2.6H_2O$$

iii) synthetic zeolites of type Y, corresponding to the typical formula:

$$Na_2O.Al_2O_3.4.8SiO_2.8.9H_2O$$

(of which also the acid form $H^+Y$ can be used);

iv) zeolites of type P;

3

v) hydrosodalite represented by the formula

$Na_2O.Al_2O_3.2SiO_2.2.5H_2O$

Mixtures of one or more of the above mentioned zeolites can be used as well.

The above zeolites, when used in compositions of the present invention, preferably have a water content of not more than 3% by weight.

In the present compositions, molecular sieves having a zeolite structure can also be used, such as aluminum phosphates, boroaluminum silicates, etc. These products can be obtained, e.g., according to the processes of EP-A-184 307 and US-A-4,385,994.

It is also possible to use natural zeolites, such as phillypsite, clinoptilite, nordenite, cabasite, etc. and mixtures thereof.

The zeolite must have a suitable granulometry to allow a perfect dispersion in the polymer. Preferably, at least 80% by weight of the zeolite consist of particles with a size lower than 15 $\mu$m and preferably lower than 10 $\mu$m (as determined by means of a Coulter Counter).

The compositions according to the present invention comprise a zeolite which has been modified by a carboxylic and/or sulfonic organic acid before being mixed with the silanized polymer.

Suitable acids are, for example, alkylcarboxylic, arylcarboxylic, alkylarylcarboxylic and arylsulfonic acids wherein the hydrocarbon radical contains from 1 to 20 (e.g. 6 to 10) carbon atoms. Among these acids the preferred ones are those endowed with chemico-physical characteristics compatible with the conditions of the process for the preparation of the modified zeolites (which requires the direct interaction of the two components at temperatures of at least 150°C (preferably from 150 to 350°C)). The acid is preferably used in the molten state, without being subjected to sublimation and decarboxylation phenomena. Therefore, the following acids are particularly preferred for the purposes of the present invention:
p-tert-butylbenzoic acid, p-toluic acid, alpha- and beta-naphthoic acid, phthalic acid, benzoic acid, methoxy- and ethoxy-benzoic acid, salicylic acid,toluenesulfonic acid, adipic acid, alpha- and beta-naphthalenesulfonic acid etc.

During the preparation of the modified zeolite the hydration water of the zeolite is removed, thus resulting in a substantially anhydrous product, characterized by an acid content of from 2 to 30% (preferably 5 to 20%) by weight.

The presence of limited residual concentrations of water (up to 30%) is allowed and does not significantly affect the cross-linking results afforded by the present invention. In fact, the cross-linking is essentially of the non-hydrolytic type at these hydration levels in that water, under the chosen working conditions, is strongly associated to the zeolite matrix and therefore the action of the organic components prevails.

The compositions of the present invention can be transformed into cross-linkable articles using any transformation technique known in the art, for instance extrusion, injection moulding, compression moulding, "block moulding", etc.

A process for the preparation of polymeric compositions of the present invention comprises:
(i) mixing an olefinic polymer modified by an unsaturated silane having hydrolyzable groups with a zeolite in finely divided form and having a water content not higher than 3% by weight which has been modified by at least one carboxylic and/or sulfonic acid at a temperature of at least 150°C; and
(ii) extruding the thus obtained mixture into granules.

Alternatively, the modified zeolite can be used in the form of a masterbatch consisting of a base polymer compatible with the silanized polyolefin which contains a high concentration of modified zeolite. This masterbatch may be mixed with the silanized polymer and the homogeneous mixture may be used in the subsequent transformation operations.

According to a further alternative the mixture prepared according to the first step of the process of the present invention can be directly used in the preparation of articles to be cross-linked.

The concentration of the zeolite-organic acid adduct in the final mixture is determined according to the working conditions of the cross-linking process and usually ranges from 1 to 25% (preferably from 5 to 10%) by weight.

The composition to be subjected to cross-linking may also contain a catalyst of the type generally used for silanolic condensations such as, for instance, tin dibutyldilaurate and tetrabutyltitanate, usually in amounts of from 0.05 to 1% by weight. However, the catalyst is not absolutely necessary, in that the cross-linking process is ensured by interactions between alkoxysilane groups of the polymer and the organic acid associated with the zeolitic surface.

4

The cross-linking of the molded articles can be performed by different processes, which may be summarized as follows:

a) thermomolding and cross-linking in a single operation, according to the procedure described in, e.g., EP-A-355,553;

b) thermoforming and cross-linking carried out in two separate steps.

With particular reference to the process specified under b), articles formed according to known processes, for instance by extrusion or moulding, may be cross-linked by one of the following methods:

b1) irradiation with microwaves having a frequency of from $10^9$ to $10^{12}$ Hz, optionally after pre-heating according to the process described, e.g., in EP-A-149,782;

b2) treatment in a hot-air or infrared ray furnace;

b3) exposure to moisture in the form of water, vapour or damp gases.

Articles molded from compositions of the present invention generally show a cross-linking degree higher than 70% and an ultimate tensile strength higher than 0.2 MPa, commonly of from 0.25 to 0.5 MPa, according to ASTM D 412.

The following examples are given for illustrative purposes only. Unless specified otherwise all percentages and parts given therein are by weight.

EXAMPLE 1 (comparison)

In a drum-tilter the following components in granulated form are mixed:

(a) 70 parts by weight of ethylene-vinyltrimethoxysilane copolymer having a silane content of 1.5%;

(b) 20 parts by weight of a masterbatch containing 50% of zeolite 4A (Merilit® B; AUSIDET) dehydrated down to a 0.5% by weight water content and 50% of polyethylene Riblene® CF2 (Enimont Milan) having a melt flow index of 1.8 dg/min (190°C/21.6N) according to ASTM D 1238;

(c) 10 parts by weight of a masterbatch containing 15% of p-tert-butylbenzoic acid and 85% of Riblene® CF2.

The mixture (a) + (b) + (c) is fed into a single-screw extruder for polyethylene (L/D = 22, diameter = 45 mm, 30 rpm, compression ratio 3:1) and is extruded at 160°C to afford a ribbon having a thickness of 4 mm and a width of 25 mm.

A sample of the manufactured article is subjected to tensile tests at 200°C according to ASTM D 412. The breaking stress ($\delta_R$) value is 0.01 MPa and the ultimate elongation ($\epsilon_R$) is higher than 300%. Data relating to the mechanical resistance show that the sample has been very weakly cross-linked during the extrusion step.

Another sample of ribbon extruded as specified above is irradiated for 7 min. by means of microwaves (2450 MHz) with a power of the generator of 1500 W. The observed mechanical characteristics show an advancement of the cross-linking,

$$\delta_R = 0.1 \text{ MPa } \epsilon_R = 200 \text{ \%}.$$

The compression moulding at 250°C for 5 min., carried out in a press with hot plates results in the following characteristics of the molded sheet:

$$\delta_R = 0.15 \text{ MPa}; \epsilon_R = 300 \text{ \%}.$$

EXAMPLE 2

In a stainless steel reactor equipped with a rotating blade agitator and a heater, there are introduced 600 parts by weight of sodium zeolite 4A (Merilit®B) previously dehydrated separately by treatment in a muffle furnace for 1 hour at 450°C.

The reactor is agitated and at 180°C 100 parts by weight of p-tert-butylbenzoic acid (TBBA) are added by carrying out the addition gradually on the moving zeolite bed. The whole mixture is agitated for another 30 minutes at 180°C and thereafter heating is discontinued.

The reactor is discharged and the reaction product is analyzed to determine the content of organic derivative and water. According to the carbon-hydrogen elemental analysis the finished product consists of a zeolite adduct containing 0.4% of water and 13.9% of TBBA, partially present as sodium salt.

500 parts by weight of the modified zeolite in the form of a fine powder thus obtained are mixed with 500 parts by weight of granulated polyethylene (Riblene®CF2) having a density of 0.919 and a melt flow index of 1.8 dg/min (190°C/21.6N) according to ASTM D 1238.

The mixture is introduced into a Banbury mixer at 170°C and the resulting homogeneous product is reduced to sheets by calendering at 110-120°C and finally is crumbled in a blade mill. In this manner a masterbatch containing 50% of the zeolite-TBBA adduct having the lowest water content (lower than 0.5%) which is used in the subsequent tests is obtained.

In a drum-tilter the following components in granulated form are mixed:

a) 60 parts by weight of ethylene-vinyltrimethoxysilane having a 1.5% silane content;

b) 40 parts by weight of the masterbatch containing 50% of the zeolite-TBBA adduct prepared according to the above described modalities.

The granular mixture of (a) + (b) is introduced into the single screw extruder described in example 1 at a temperature of 160°C, thus obtaining the same type of ribbon as in example 1.

On a specimen of this ribbon the stress/deformation behavior at 200°C is determined (ASTM D 412-DIEC method) and the following values are obtained:

| | |
|---|---|
| breaking stress ($\delta_R$): | 0.25 MPa |
| ultimate elongation ($\epsilon_R$): | 90 % |
| secant modulus at 40% elongation ($E_{40}$): | 0.35 MPa |

On another specimen the tensile strength in hot condition is measured by the "hot set" method (IEC 502/540 at 200°C/20N/15 min.). The tensile elongation is 40% and the permanent deformation is 22%.

The behaviour in the mechanical tests shows that the extruded product is cross-linked and the cross-linking occurred during the extrusion step.

Specimens of extruded ribbon are subjected to irradiation for 16 minutes by means of microwaves (2450 MHz; 1000 W) after pre-heating with hot air at 180°C. The final data relating to the stress/deformation characteristics at 200°C are as follows (according to ASTM D 412-DIEC):

$\delta_R$ = 0.49 MPa; $\epsilon_R$ = 35%; $E_{40}$ = 1.84 MPa

These data show the further remarkable advancement of the cross-linking.

EXAMPLE 3

In a drum-tilter the following components in granular form are mixed:

a) 80 parts by weight of the ethylene-vinyltrimethoxysilane copolymer described in example 2;

b) 20 parts by weight of the masterbatch containing 50% of the zeolite-TBBA adduct prepared according to the modalities of example 2.

The granular mixture of (a) + (b) is charged into the extruder of example 2 (head temperature = 200°C).

Specimens of the extruded ribbon give the following (average) stress/deformation data, according to the method indicated in example 2:

$\delta_R$ = 0.05 MPa; $\epsilon_R$ = 200%; $E_{40}$ = 0.03 MPa.

The manufactured article, therefore, has only been weakly cross-linked during the extrusion step.

Subsequent irradiation by means of microwaves, under the conditions of example 2, yields the following mechanical characteristics at 200°C (according to ASTM D 412):

$\delta_R$ = 0.34 MPa; $\epsilon_R$ = 70%; $E_{40}$ = 0.58 MPa

due to further cross-linking.

Other specimens of the extruded manufactured article are immersed in water at 80°C, for 8 hours; the cross-linking occurs and gives the following values determined according to the same method:

$\delta_R$ = 0.29 MPa; $\epsilon_R$ = 110%; $E_{40}$ = 0.35 MPa.

EXAMPLE 4

The following components in granulated form are mixed:

a) 80 parts by weight of an ethylene-vinyltrimethoxysilane having a silane content of 1.1%;

b) 20 parts by weight of the masterbatch containing 50% of the zeolite-TBBA adduct prepared according to the modalities of example 2.

The granulated mixture (a) + (b) is fed to the extruder of example 2, the head temperature of which is 175°C.

The extruded ribbon shows the following mechanical characteristics at 200°C (according to ASTM D 412):

$\delta_R$ = 0.04 MPa; $\epsilon_R$ = 300%; $E_{40}$ = 0.02 MPa.

A specimen of the extruded manufactured article is preheated at 95°C and subjected to irradiation by means of microwaves for 6 minutes (frequency 2450 MHz; power 1500 W); the internal temperature of the specimen, determined by means of a thermocouple, quickly rises to 210°C and the cross-linking occurs, affording the following stress/deformation values measured by the method specified above:

$\delta_R$ = 0.2 MPa; $\epsilon_R$ = 150%.

Another sample of the extruded manufactured article is subjected to compression moulding at 250°C for 5 minutes in a press provided with heated plates; the following values of mechanical characteristics of the molded sheet are obtained:

$\delta_R$ = 0.27 MPa; $\epsilon_R$ = 50%

(measured by the above methods).

EXAMPLE 5

A homogeneous mixture of the following granulated components is prepared:

a) 80 parts by weight of the ethylene-vinyltrimethoxysilane copolymer described in example 2;

b) 20 parts by weight of the masterbatch containing 50% of the zeolite-TBBA adduct prepared according to the modalities of example 2.

The granulated mixture of (a) + (b) is fed to the extruder of example 2, the head temperature of which is 160°C.

Specimens of the extruded ribbon give the following (average) stress/deformation data according to the method indicated in example 2:

$\delta_R$ = 0.025 MPa; $\epsilon_R$ = 400%.

A treatment in an infrared ray furnace (5 minutes of exposure at 230-250°C) results in further cross-linking, as indicated by the following values:

$\delta_R$ = 0.28 MPa; $\epsilon_R$ = 90%.

EXAMPLE 6

Into the stainless steel reactor described in example 2, 600 parts by weight of sodium zeolite 4A (Merilit®B) are introduced; the product is heated to 300°C and this temperature is maintained for about two hours under a nitrogen stream. Thereafter, 100 parts by weight of p-tert-butylbenzoic acid (TBBA) are slowly added, while stirring the mixture at 180-200°C for a further 30 minutes. The heating is discontinued and the reactor is discharged. The analysis of the reaction product, carried out as described in example 2, indicates that the zeolite adduct obtained contains 16% of TBBA and 3% of water.

The following components in granulated form are mixed:

EP 0 475 064 A1

a) 90 parts by weight of the ethylene-vinyltrimethoxysilane copolymer used in example 4;

b) 10 parts by weight of the masterbatch containing 50% of the zeolite-TBBA adduct described above.

The granulated mixture of (a) + (b) is extruded at 160°C. The data relating to the mechanical characteristics of the extruded product are as follows:

$\delta_R$ = 0.05 MPa; $\epsilon_R$ = 200%.

After microwave exposure, according to the process of example 2, the following results are obtained:

$\delta_R$ = 0.2 MPa; $\epsilon_R$ = 150%.

EXAMPLE 7

A zeolite-benzoic acid adduct is prepared, by working under the conditions of example 2, from 500 parts by weight of dehydrated sodium zeolite 4A and 70 parts by weight of benzoic acid. After dehydration of the zeolite (see example 2), the addition of benzoic acid is carried out at 150°C. The final product contains 12% of benzoic acid and 0.6% of water.

The following components in granulated form are mixed:

a) 80 parts by weight of the ethylene-vinyltrimethoxysilane copolymer used in example 2;

b) 20 parts by weight of the masterbatch containing 50% of the zeolite-benzoic acid adduct described above.

The granulated mixture of (a) + (b) is extruded at 190°C according to the modalities of example 2.

Specimens of the extruded ribbon give the following (average)stress/deformation data, according to the method of example 2:

$\delta_R$ = 0.04 MPa $\epsilon_R$ = 250%; $E_{40}$ = 0.03 MPa.

The subsequent irradiation by means of microwaves, according to the process of example 2, affords the following thermomechanical characteristics:

$\delta_R$ = 0.32 MPa; $\epsilon_R$ = 110%; $E_{40}$ = 0.29 MPa.

**Claims**

1. Cross-linkable polymeric compositions, comprising

   (a) an olefinic polymer modified with unsaturated silane having hydrolyzable groups; and

   (b) a zeolite in finely divided form and having a water content not higher than 3% by weight which has been modified with at least one carboxylic and/or sulfonic acid at a temperature of at least 150°C.

2. Compositions according to claim 1, wherein the olefinic polymer is selected from:

   a) high, medium and low density polyethylene;

   b) polypropylene;

   c) copolymers of ethylene and propylene and/or other monoolefins;

   d) thermoplastic rubbers of ethylene-propylene copolymers or ethylene-propylene-diene terpolymers;

   e) ethylene-vinylacetate and ethylene-acrylate copolymers.

3. Compositions according to any one of claims 1 and 2, wherein the modifying unsaturated silanes are selected from vinyltrimethoxysilane, vinyltriethoxysilane, vinylmethyldimethoxysilane, vinyltriacetoxysilane and gammamethacryloxypropyl-trimethoxysilane.

4. Compositions according to any one of the preceding claims, wherein the silanized polymers have a silane content of from 1 to 10% by weight.

5. Compositions according to any one of the preceding claims, wherein the zeolites are aluminum silicates

8

of one or more metals, preferably alkali and/or alkaline earth metals, of general formula (II):

$$Me_{2/x}O.Al_2O_3.ySiO_2.zH_2O \qquad (II)$$

wherein:

Me    is a metal, preferably an alkali and/or alkaline earth metal;

x    is the valence of the metal;

y    is the molar ratio $SiO_2/Al_2O_3$; and

z    is the hydration degree of the zeolite.

6. Compositions according to any one of the preceding claims wherein at least 80% by weight of the zeolite have a particle size of less than 15 $\mu$m.

7. Compositions according to any one of the preceding claims wherein the carboxylic or sulfonic acid is selected from alkylcarboxylic, arylcarboxylic, alkylarylcarboxylic and arylsulfonic acids wherein the hydrocarbon radical contains from 1 to 20 carbon atoms.

8. Compositions according to any one of the preceding claims wherein the zeolite has been modified with the carboxylic or sulfonic organic acid at a temperature of from 150 to 350°C.

9. Compositions according to any one of the preceding claims wherein the modified zeolite has an acid content of from 2 to 30% by weight.

10. Process for the preparation of polymeric compositions of any one of the preceding claims, comprising:

(i) mixing an olefinic polymer modified by an unsaturated silane having hydrolyzable groups with a zeolite in finely divided form and having a water content not higher than 3% by weight, which has been modified with at least one carboxylic and/or sulfonic acid at a temperature of at least 150°C; and

(ii) extruding the mixture thus obtained into granules.

11. Process according to claim 10, wherein the concentration of the modified zeolite in the final mixture is from 1 to 25% by weight.

12. Articles produced from the compositions of any one of claims 1 to 9.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | EP-A-0 149 782 (F GIMPEL)<br><br>* page 2, line 4 - line 8 *<br>* page 2, line 18 - line 30 *<br>* page 3, line 5 - page 4, line 12 *<br>* examples 2,4-7 *<br>* claims 1-5 *<br>--- | 1-5,10, 11 | C08K9/04<br>C08K3/34 |
| X | EP-A-0 355 553 (AUSIDET)<br><br>* column 1, line 45 - column 2, line 25 *<br>* column 2, line 55 - column 3, line 32 *<br>* column 4, line 3 - column 5, line 14 *<br>* examples *<br>* claims *<br>--- | 1-5,10, 11 | |
| A | EP-A-0 369 473 (UNION CARBIDE)<br>* page 2, line 30 - line 38 *<br>* page 2, line 51 - line 53 *<br>* page 3, line 6 - line 19; claims 1-3 *<br><br>----- | 1-3 | |
| | | | TECHNICAL FIELDS SEARCHED (Int. Cl.5)<br><br>C08K<br>C08L |

The present search report has been drawn up for all claims

| Place of search | Date of completion of the search | Examiner |
|---|---|---|
| THE HAGUE | 21 NOVEMBER 1991 | ENGEL H,S,L, |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P0406)